# EUROPEAN PATENT SPECIFICATION

(11) **EP 3 152 033 B1**
(45) Date of publication and mention of the grant of the patent: **12.02.2020**
(21) Application number: 14790482.5
(22) Date of filing: 15.09.2014
(51) Int. Cl.: B29C 64/165, B28B 1/00, B28B 17/00, B33Y 70/00, B33Y 30/00, B33Y 40/00

(54) **ADDITIVE MANUFACTURING MACHINE FOR CREATING THREE-DMENSIONAL OBJECTS FROM POWDER MATERIAL AND FUSING SUBSTANCE**
MASCHINE ZUR ADDITIVEN FERTIGUNG ZUR ERSTELLUNG VON DREIDIMENSIONALEN OBJEKTEN AUS PULVERMATERIAL UND SCHMELZSTOFF
MACHINE DE FABRICATION PAR ADDITION POUR CRÉATION D'OBJETS TRIDIMENSIONNELS À PARTIR D'UNE MATIÈRE EN POUDRE ET D'UNE SUBSTANCE DE FUSION

(30) Priority: 28.02.2014 BG 11171114
(43) Date of publication of application: 12.04.2017
(73) Proprietor: "Print Cast" Ltd., 1124 Sofia (BG)
(72) Inventor: TODOROV, Georgi Dimitrov, 1124 Sofia (BG); IVANOV, Tsvetozar Tihomirov, 2140 Botevgrad (BG)
(74) Representative: Lekova, Tatyana Boyanova
(86) International application number: PCT/BG2014/000034
(87) International publication number: WO 2015/127519

(56) References cited:
- WO-A1-01/96048
- US-A1- 2001 050 448

## Description

### Field of the invention

The invention refers to an additive manufacturing machine for creating a three-dimensional model from powder material, which finds application in a variety of areas and especially in foundry industry for constructing whole sand molds and/or sand cores with high accuracy directly from a computer generated three-dimensional model.

### Prior Art

There are known additive manufacturing machines for creating a three-dimensional model from powder material (US2004/0035542A1), in which the adding of the powder material is done by a system, that when done with the adding of the powder material returns to starting position in fast pace. When the system returns to starting position, a second system begins to move, which adds the fusing substance. When the second system is done with its pace, it returns to starting position. This way there is a sequence of actions with not covered cycle times, which result in mutual waiting times. In the known machines, respectively the powder adding system and adding of the fusing substance system, move in the same direction.

There are known systems for applying the powder material, which consist of one auger, distributing the material to the whole length of the

WO-A-01/96048 discloses the features of the preamble of claim 1.

In known machines the lifting system for lifting and lowering the main plate, on which the adding of the layers of material is realized, is operated by a ball screw, located either in the removable container, or in the machine.

The disadvantages of the known solutions are that the work cycle has a long duration, as a result of not combining the work times for returning to starting position and that leads to decreasing the productivity of the whole machine. The motion in one direction of both of the systems for adding the material and the fusing substance creates an imminent waiting cycle.

The including of an auger in the system for adding the powder material is a disadvantage, because it is possible that the material can gather in one end of this machine and it is necessary to control this problem. In addition to that fact the weight rises, so the dynamic movement and the velocity of the whole system decrease.

The lifting systems, which include the ball screw to operate, have the disadvantage to be necessary to have a synchronised motion, which makes it technologically harder to make and it is necessary to have a precise fabrication of the consisting components. The protection from dirt and other polluters is harder and a frequent maintenance is needed.

### Subject-matter of the invention

The main goal of the invention is the creation of an additive manufacturing machine for creating a three-dimensional model by adding material layer by layer, which will be a substitute for the classic method for manufacturing sand molds, by lowering the production time of foundry equipment and raising the accuracy and to make possible the creation of more complex molds without the need of technical layout of the product (e.g. draft angles, split lines etc.). The machine will also make possible the construction of combined molds with integrated cores without technological limits for assembling the molds and the cores.

The goal is achieved by creating an additive manufacturing machine for creating three-dimensional objects from powder material, that consists of a chassis, in which are inserted one below the other a loading system, an additive system for applying powder material, system for applying fusing substance, a container with movable bottom, fixating system for the container, lifting system for lifting the movable bottom of the container and a control unit, located in the top part of the chassis. A characteristic feature of the machine is, that the system for applying the powder material and the system for applying the fusing substance are mounted on the chassis with the ability to move in perpendicular planes one towards the other.

In accordance with the invention the additive manufacturing machine for creating a three-dimensional model from powder material is defined in claim 1. The additive system for applying powder material consists of a body in which two rolls, which rotate in opposite directions, are connected to a corresponding electric motor. The two rolls are separated by a separating plate. The rolls have grooves for dosing the necessary material and one of the rolls works in one direction and the other in the opposite direction.

In another type of construction of the machine, the system for applying powder material includes a longitudinally vibrating part, which has a special coating. The vibrating part is hung on elastic parts, which allow vibrations only in longitudinally direction.

It is expedient that the vibrations are caused by an electric motor, which by an eccentric and two elastic plates allows the vibrations to traverse only throughout the length of the vibrating part.

It is appropriate that to each side, of the system for applying powder material, an according linear drive is connected, with its own electric motor and both electric motors are synchronized by a firm connection. The body of the assembly is connected firmly to one of the drive and elastically to the other by plates, allowing deformations only on its length.

In another type of construction of the additive manufacturing machine for creating three-dimensional objects from powder material, the system for applying fusing substance includes a beam, on which the heads for applying the fusing substance are located checkerwise, or the drive of the heads, if the heads for applying are fewer and it is necessary the whole length to be covered. The beam is connected to two linear drives, which have separate electric motors. The motors are synchronized together by a firm connection. The linear drives are connected to a common frame, with the ability to adjust and set them, depending of the plane of applying the powder material.

In another type of construction the additive manufacturing machine for creating three-dimensional objects from powder material, the system for dosing includes a roll with specialized coating with grooves and two augers, located above the unit for applying the powder material, so that the material can be distributed evenly throughout the whole length.

In another type of construction the additive manufacturing machine for creating three-dimensional objects from powder material, the lifting system is a scissor type, consisting of two metal structures that are connected by an axle. The first structure has one rotating support and one rotating and translating support. The second structure also has a rotating support and a rotating and translating support, but the supports are arranged perpendicular of the first structure. A shaft from the first structure is connected to the bottom end by an axle, so that a motion by the lifting platform can be performed parallel of its basis.

It is expedient that in the bottom end of the chassis there are multiple grooves for evacuating the redundant material.

An advantage of the proposed solution, for an additive manufacturing machine for creating three-dimensional objects, is that all the positive qualities of the known similar machinery are retained, which results in a significant quickening of the process, and because of that the foundry models become cheaper.

The acceleration of the process is achieved by the developed construction that in such a way, that after applying one layer of powder material, the powder applying system not to return to starting position, but to remain at exit position to wait for the applying of the fusing substance. The same way operates the system for applying the fusing substance. It remains at exit position to wait for the system for applying the powder material to lay another layer of material and to return to its starting point and only after that the system for applying the fusing substance lays another layer fusing substance and returns to starting position. In practice one full work cycle consists of two motions of both applying systems for application of powder material and fusing substance.

### Description of the figures

Figure 1 shows a scheme of the additive manufacturing machine for creating three-dimensional models from powder material according to the current invention;
Figure 2 shows a full view of the additive manufacturing machine for creating three-dimensional objects from powder material;
Figure 3 shows the additive manufacturing machine for creating three-dimensional objects from powder material in exploded view;
Figure 4.1 is a schematic view of the system for applying powder material;
Figure 4.2 is a top view of the system for applying powder material;
Figure 4.3 is the section view A-A from figure 4.1;
Figure 4.4 is the section view B-B from figure 4.2;
Figure 5 is a schematic view of the system for applying the fusing substance;
Figure 6 depicts the system for loading the powder material in the system for applying the powder material;
Figure 7.1 represents a schematic view of the container in which the three-dimensional models are extruded from the powder material and the system for fixating the container to the machine;
Figure 7.2 shows the lifting system, necessary for lifting and lowering the plate, on which the layers of powder are laid.

### Examples of embodiment of the invention

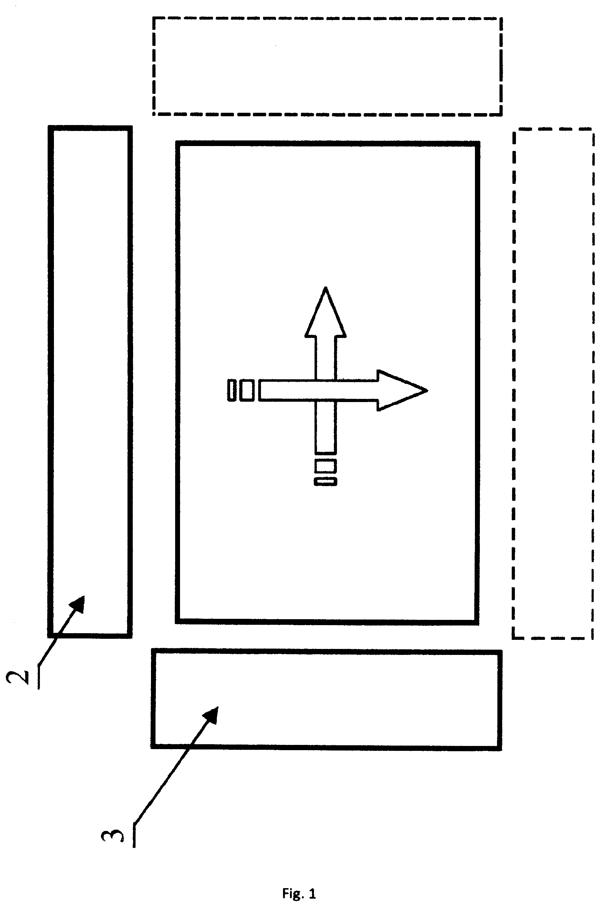

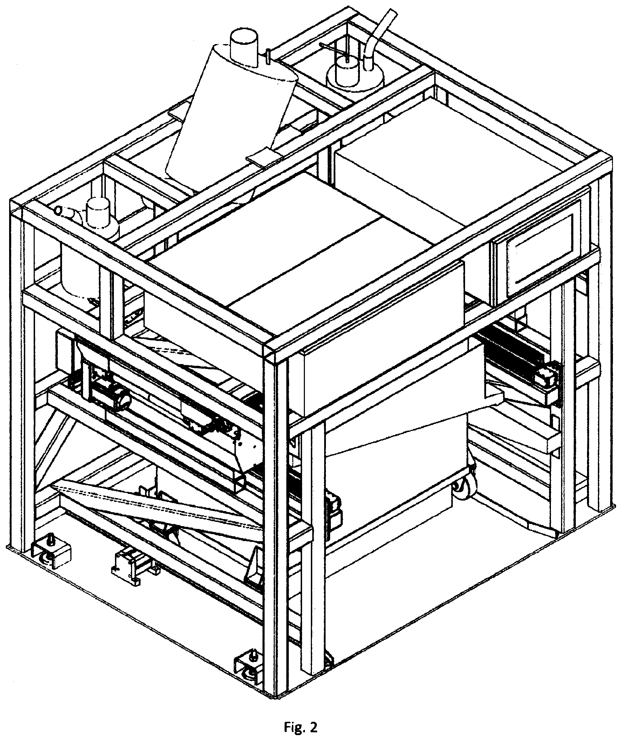

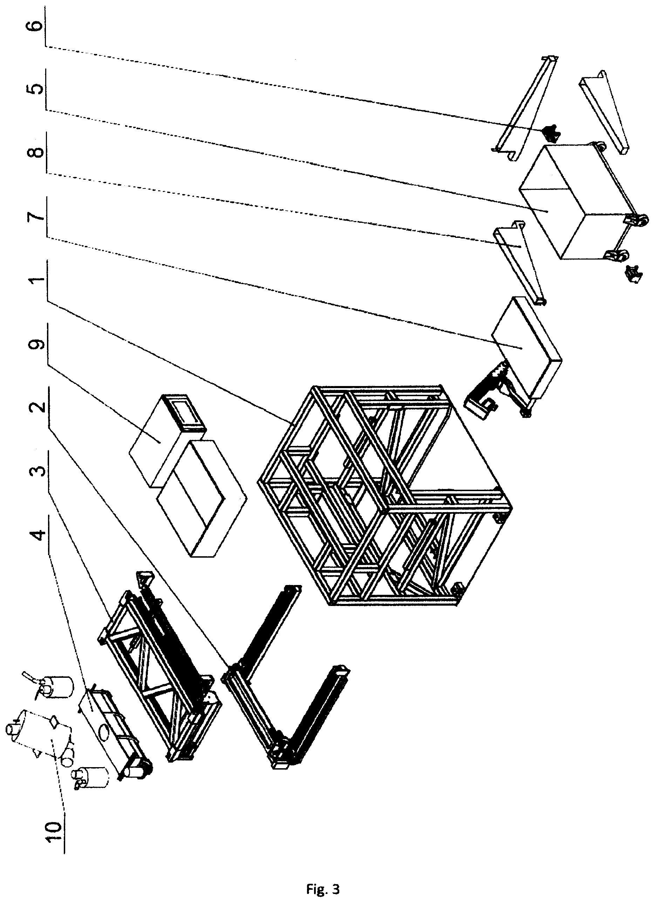

Additive manufacturing machine for creating three-dimensional objects from powder material (Figure 1, 2 and 3) consists of chassis 1, system for applying the powder material 2, system for applying the fusing substance 3, loading system 4, container 5 with removable bottom, fixating system 6 for the container, lifting system 7 for lifting the movable bottom of the container 5, multiple grooves 8 for collecting the redundant material and a control unit 9.

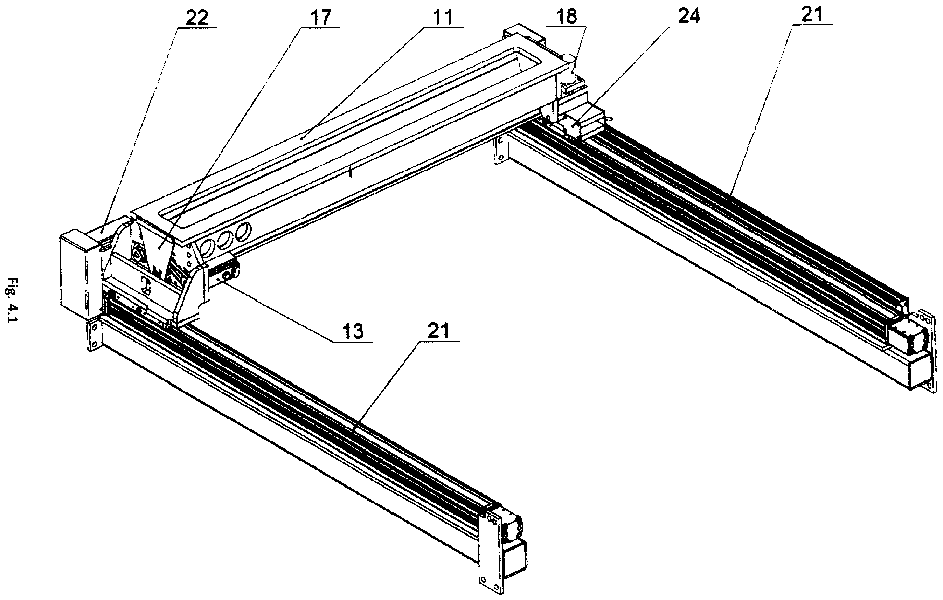

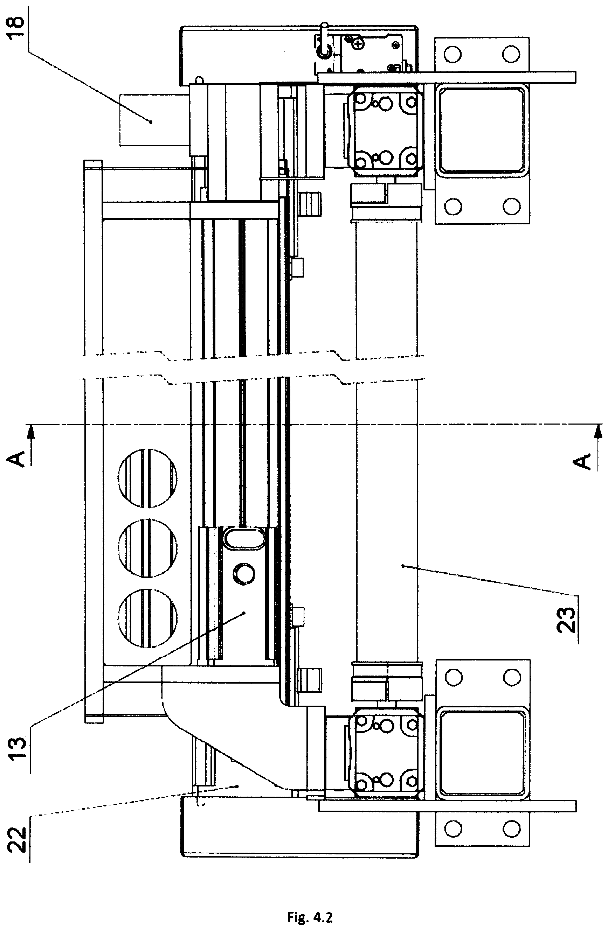

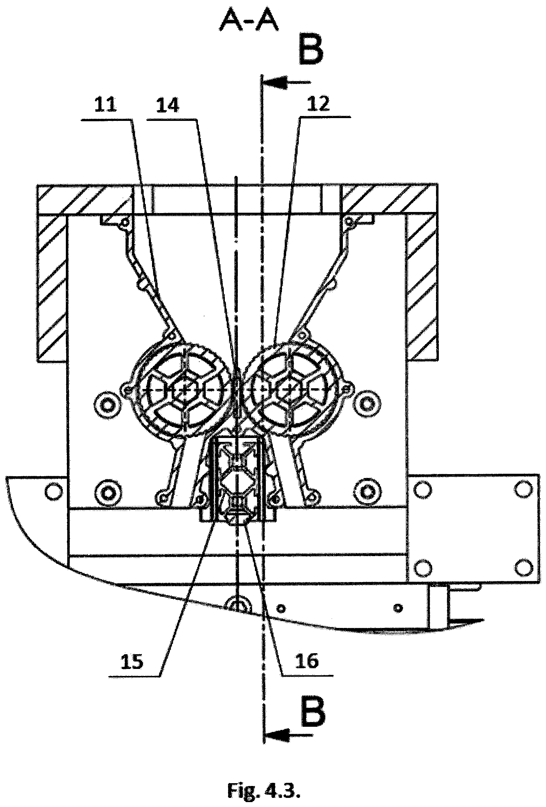

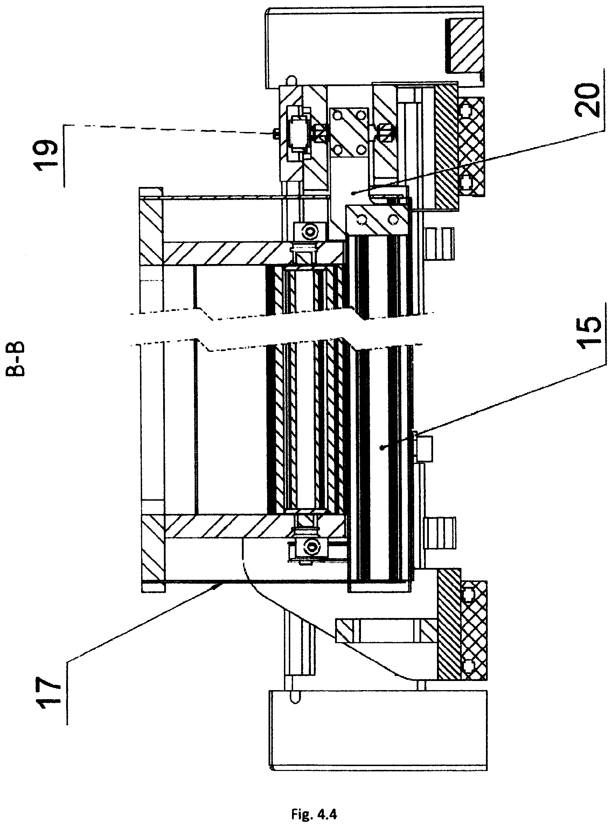

On the chassis 1 a system for applying powder material 2 is connected, which (figure 4.1, 4.2, 4.3, 4.4) consists of a body 11, two rolls that rotate in the opposite direction 12, powered by two electrical motors 13. The two rolls 12 are separated by a separating plank 14 and the rolls have grooves, by which the powder material is dosed. One of the rolls works in one direction and the other in the opposite direction. The system 2 includes longitudinally vibrating part 15, which has a special coating 16, the vibrating part is hung on elastic parts 17, allowing vibrations only throughout lengthwise direction. The vibrations are caused by the electric motor 18, which consists of an eccentric 19 and two elastic plates 20, which allow vibrations only throughout the vibrating part 15. The whole system for applying the powder material 2 is driven by both its sides by linear drives 21, which have separate electric motors 22, but both are synchronized by a firm connection 23. The body of this system is connected firmly to one of the drives and elastically to the second by plates 24, allowing deformations only throughout its length.

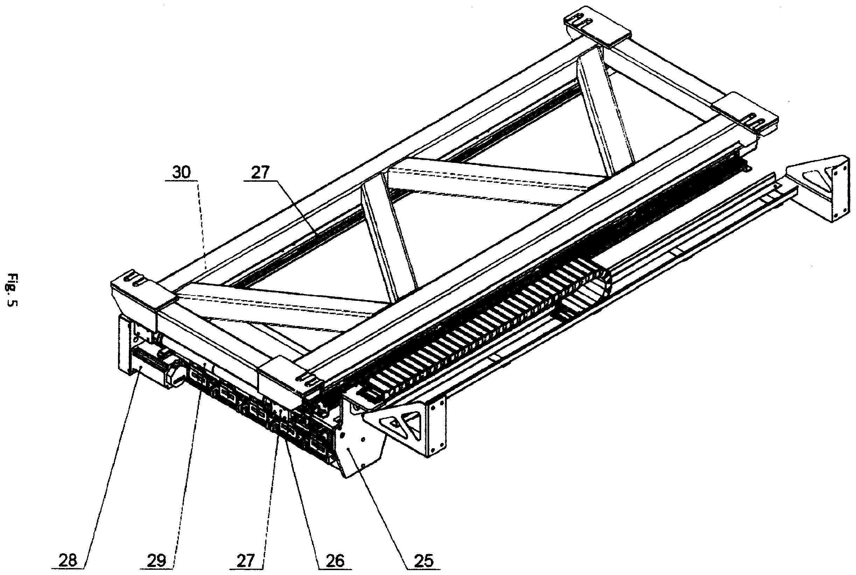

The system for applying the fusing substance 3, consists of (figure 5) a beam 25 on which the heads for applying the fusing substance 26 are located checkerwise, or the drive of the heads, if the heads for applying are fewer and it is necessary the whole length to be covered. The beam 25 is connected to two linear drives 27, which have separate electric motors 28 and their motors are synchronized by a firm connection 29. The linear drives are connected to a common frame 30, with the ability to adjust and set them, depending of the plane of applying the powder material.

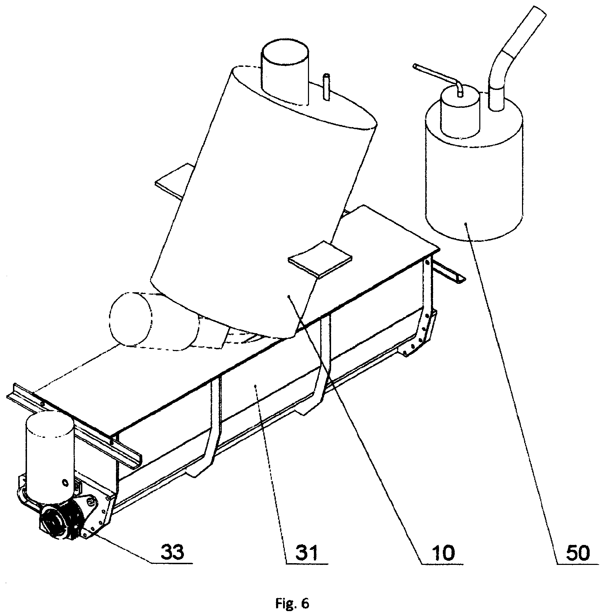

The loading of the powder material in the system for applying the powder material 2 is done by a loading system 4. The loading system consists of (figure 6) body 31 with a hopper, in which the necessary material is dosed according the weight. The material comes from a mixer 10, loaded with powder material and additive substance from hopper 50. The even lengthwise distribution of the material in the bunker is done by two screws 32. The dosing from this system to the system for applying 2 is done by the roll 34, connected to an electric motor and a gearbox 33, the roll has grooves in its specialized coating.

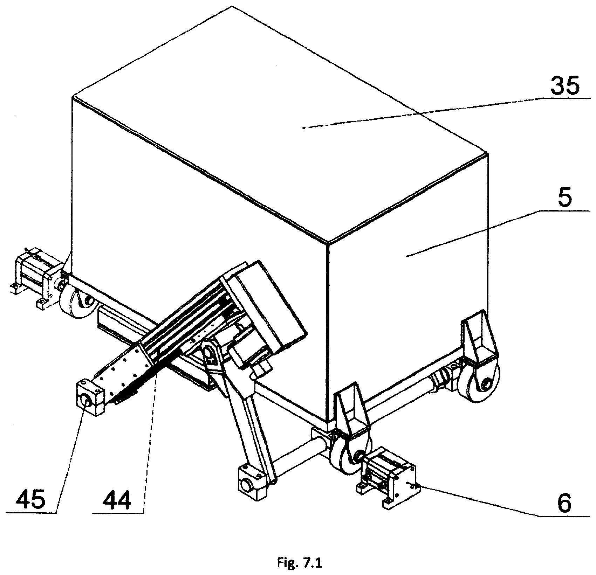

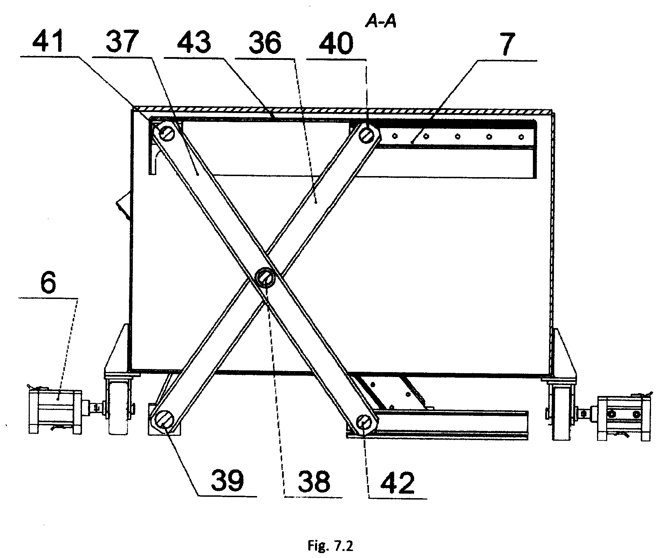

The application of the powder and the following application of the fusing substance is done in container 5, or more exactly on the bottom of the container 35 (figure 7.1), lifted and aligned in its top end. The fixation of the container to the machine is done by retainers 6. Lifting and lowering of the movable bottom is done by the scissor type lifting system 7 (figure 7.2). This lifting system consists of two metal structures 36 and 37 that are bound together by an axle. The first structure 36 has one rotating support 39 and one rotating and translating support 40. The second structure 37 also has a rotating support 41 and a rotating and translating support 42, but they are arranged perpendicular of the first structure 36. A shaft from the first structure 36 is connected to the bottom end by an axle, so that a motion of the lifting platform 43 can be performed parallel of its basis. The rotation is caused by a linear drive 44, carried out from the platform 43 and connected with a bearing in its bottom end to the basis of the machine by axle 45.

The gathering of the redundant material after it has been laid is done by a system of grooves 8.

The electric elements and the control unit (10) of the machine are located in the top end of the chassis 1.

### Usage of the invention

The work cycle of the machine is defined by the motion, caused by the system for applying the powder material 2 and the system for applying the fusing substance 3. Both systems are moving on planes, the directions of movement being perpendicular. This way the redundant motions for returning to starting positions are eliminated. This way, the movements allow one work cycle to have a short duration.

During the work process of the system for applying the fusing substance 3, the loading of the system for applying the powder material 2 is realized by the loading system 4. This way the loading times is added to the common work cycle, which results in raising the productivity of the system.

During the work process of the system for applying the fusing substance 3, the loading of the powder from the loading system 4 is done by micro injection. The quantity of the material is sufficient for the laying of two layers of powder material, so that the machine for applying the powder material 2 can lay the first layer, wait for the system for applying the fusing substance 3 to apply the fusing substance, then the system for applying the powder material to return to starting position, where a following loading is realized.

Both systems 2 and 3 apply the corresponding substance throughout the whole length of the workspace. The system for applying the fusing substance is 3 has checkerwise arranged heads for applying the fusing substance 26 and their number is according to the length of the workspace, their total length should be equal to the length of the workspace in this direction of motion.

When the total length of the applied layer is less than the length of application, the heads for applying the fusing substance 26 are driven by a linear drive 27 traverse against the movement of the beam 25.

The mutual adjustment of the systems 2 and 3 is done by taking for basis the plane, determined by the applying of the powder material, thus the system for applying fusing substance 3 is adjusted according to the basis plane.

After the application of powder material, a smoothing of the laid layer is done by vibrations caused by the longitudinally vibrating part 15, which has a specialized coating 16. The connection of this longitudinally vibrating part 15 is realized by the elastic parts 17, allowing vibrations only throughout lengthwise direction of the longitudinally vibrating part 15. The vibrations are caused by the electric motor 18 and an eccentric 19 that transmit the vibrations through the elastic plates 20 only in one direction to the vibrating part 15.

The system for applying the powder material 2 is driven by two drives 21. The body 11 of this system is connected firmly to one of the drives and elastically to the second by plates 24, allowing deformations only throughout its length.

Both systems for applying 2 and 3 are arranged perpendicular to each other, and have the ability to move in perpendicular planes one towards the other. That makes the work cycle without any redundant motions and that results in raising the productivity of the whole machine.

The powder material is applied to the total length of the workspace in one motion, thus the work speed rises. The application of the powder material is done, by combining of the dosing of the powder material by rotating the roll 12 which has the specialized coating with lengthwise arranged grooves, and the motion of the whole system for applying the powder. The system is designed to have two rolls 12 for spreading in the corresponding direction. That way the applied powder material is smoothed by the longitudinally vibrating part 15 with a specialized coating. The longitudinally vibrating part 15 vibrates with a certain frequency of movement. These vibrations are caused by an eccentric mechanism, providing vibrations only in lengthwise, but not in cross direction. This is realized by elastic parts that have big hardness in lengthwise direction and big elasticity in crosswise.

The whole system for applying the powder material 2 can be viewed as a beam, which on one end is hung firmly to a drive, providing linear motion with a certain velocity and acceleration. On the other end the system is hung by an elastic part again to a drive. This elastic link gives the opportunity to compensate any inaccuracies due to production or assembling, also to compensate for lengthwise deformations, received due to thermal deformations or deformations due to the inhomogeneity of the composing materials. The problem with these deformations is solved by using elastic materials, giving the opportunity to deform only in direction of the axis of the powder applying system. Both linear motions are synchronized by a synchronizing shaft, to eliminate any delay from both ends.

The system for applying the fusing substance 3 is realized by the beam 25, on which the heads for applying the fusing substance are arranged checkerwise on both sides of the beam. The number of these heads is according to the combined length of the heads that has to be equal to the workspace length. This gives the opportunity to apply the fusing substance with one motion. In cheaper solutions, the number of heads 26 is either one, or fewer than normal, which traverse perpendicular of the motion of the beam 25, so the whole length of the workspace is covered.

The mutual arrangement of the two systems, for applying the powder material 2 and for applying the fusing substance 3, is adjustable. This setting is done by the initial assembling of the whole machine. For the basis is taken the plane, determined by the system for applying the powder material 2, thus the system for applying fusing substance 3 is adjusted according the basis plane. This adjustment is made possible by a few adjustable units, which give the opportunity to a whole frame, carrying the corresponding system, to be adjusted according the plane on which the powder material is applied.

The powder material is loaded in the according system for application 2, only when it is in starting position, this is why it is designed to carry material worth for two layers. The loading is performed after a screw mixer makes the substance homogeneous and dosed by weight in the loading system 4, in which the mixture continues to be made homogeneous by two screws 32, which transport the material in opposite directions. These screws have the task of evening the material in the whole length of its volume, so that it can be applied faster and the layer to be more even. The even application of the material is important, because of the following applying of material. The application of the powder material from the system for applying powder material 2 is done by rotating the dosing roll 12, which has a specialized coating with grooves, which provide the dosing of the powder material.

The whole work cycle is applying powder material layer by layer. After one layer is laid and every layer has the same thickness, then the layers must be lowered by a step equal to the thickness of one layer. The realization of this process is made by the container 5, in which all necessary layers are applied. The container 5 is an element of the whole machine that has an area, equal to the area of the workspace of the machine, also equal to the length of the machine. This container has a movable in vertical direction bottom, which when the container is empty lies at the bottom of the container. When the machine starts working the bottom is lifted in the top end of the container 5 to the plane that the layers will be applied. After the application of one layer and then the application of the fusing substance, the bottom is lowered with a step equal to the thickness of the layer, that process is executed multiple times until either the three-dimensional model is extruded, or when the bottom reaches the bottom end of the container. After the container 5 is full, it is evacuated manually or automatically. The container is changed with an identical container, for bigger productivity of the whole cycle. The new container 5 is fixated by the retainers 6, which give him the correct position and protect the container from any movements.

The system 7 is necessary for lifting and lowering the removable bottom of the container 5. It has a scissor type kinematic scheme, which gives the opportunity to realize high lifting from initial small height. The lifting system 7 consists of two frame structures 36 and 37, which are connected by an axle 38 in the middle of them. The first structure 36 is linked to the basis of the whole machine by the support 39, giving the opportunity only to rotate and in the other end the structure has the support 40, that can translate and rotate. The second structure 37 has the same type supports, but the bottom support can translate and rotate 42 and the top support 41 can only rotate. When a shaft from the first structure 36 (not shown in figure 7), connected with a bearing in the bottom support 39, the first structure lifts together with the second 37 which assures equal lifting of the top ends of both structures. This gives the opportunity to the platform 43, linked to the top of both of the structures and, to move parallel of the basis and that way to lift and lower the bottom of the container 5, on which the layers are applied. The rotation of the mentioned shaft is done outside of both structures 36 and 37, which gives the opportunity to be realized. The motion is organized by the firm linked arm that is moved by the linear drive 44 with a rotating support, located on the main plate of the machine.

During the process of application of the layers of the powder material, small amount of the powder falls near the sides of the workspace. The fallen powder is captured by the multiple grooves 8, which evacuate and gather the material for recycling.

The carrier structure of the machine is a metal frame 1, located on the main plate, on which the lifting system 7 is laid and on which the container 5 is moving.

The machine has a construction line up of an additive manufacturing machine for creating a three-dimensional model from powder material that is a level based structure. In this structure on the first level the movement of the container 5 and its fixating system with retainers 6 to the chassis 1 of the machine along with the lifting system 7 under the container. On level two the application of the layers of powder material and fusing substance is applied along with the systems 2 and 3, necessary for their application, along with their drives. On level three the loading system, needed for realizing the work process, is based along with the electrical systems and the control unit 9.

## Claims

1. The additive manufacturing machine for creating a three-dimensional model from powder material, that consists of chassis (1), in which are located one below the other a loading system (4), system for applying powder material (2), system for applying fusing substance (3), container (5) which includes a movable bottom, a fixating system (6), a lifting system (7) for lifting the movable bottom of the container (5), the additive manufacturing machine also includes a control unit (9) and the system for applying powder material (2) and the system for applying fusing substance (3) are mounted on the chassis (1) in such a way as to be able to move mutually perpendicular over one and the same plane, **characterized in that** the control unit (9) is located at the top end of the chassis (1) and **in that** the system for applying powder material (2) consists of a body (11) and of two rolls that rotate in opposite directions, powered by two electrical motors (13), wherein the two rolls are separated by a separating plate and the rolls have grooves, from which the powder material is dosed, and one of the rolls works in one direction and the other in the opposite direction.

2. The additive manufacturing machine for creating a three-dimensional model from powder material according to claim 1, **characterized in that**, the system for applying powder material (2) consists of a longitudinally vibrating part (15), which has a special coating (16), the vibrating part is hung on elastic parts (17), allowing vibrations only throughout lengthwise direction.

3. Additive manufacturing machine for creating a three-dimensional model from powder material according to claim 2, **characterized in that**, the vibrating part (15) is linked to two elastic parts (20), to which an eccentric (19) is connected and linked to an electric motor (18) in a way, so the vibrations can traverse only throughout lengthwise direction of the vibrating part (15).

## Patentansprüche

1. Maschine zur sdditiven fertigung zur erstelung von dreidimensionalen Objekten aus pulvermaterial und schmelzstoff, umfassend einen Rahmen (1), wobei ein Ladesystem (4) und ein Pulverbeschichtungssystem (2) angeordnet sind, ein Bindemittelauftragssystem (3), ein Behälter (5), ein Ladesystem (4), ein Behälter (5) mit beweglichem Boden, ein Befestigungssystem (6), ein Hebesystem (7) des beweglichen Bodens des Behälters (5), das System zum Schichtenbauen umfasst ferner eine Steuereinheit (9) und eine Pulverbeschichtungsanlage (2) sowie eine Bindemittelauftragsanlage (3), die an dem Rahmen (1) in einer solchen Weise montiert sind, dass sie zueinander senkrecht zu einer und der selben Ebene bewegen können und auch **dadurch gekennzeichnet, daß** die Steuereinrichtung (9) am oberen Ende des Rahmens (1) angeordnet ist und dass das Pulverbeschichtungssystem (2) aus einem Körper (11) und zwei Rollen (12) besteht, die angetrieben von zwei Elektromotoren (13), in entgegengesetzten Richtungen drehen, wobei die beiden Rollen (12) durch eine Trennplatte (14) voneinander getrennt sind und die Rollen Nuten haben, von denen die Abgabe des pulverförmigen Materials dosiert wird, wobei eine der Rollen in die eine und die andere in die entgegengesetzte Richtung läuft.

2. Maschine Gegenstände nach Anspruch 1, **dadurch gekennzeichnet, dass** das Pulverauftragssystem (2) aus einem Vibrationselement (15) mit einer speziellen Beschichtung (16) besteht und das Vibrationselement (15) an elastischen Elementen (17) angelenkt ist, die eine Vibration nur in Längsrichtung ermöglichen.

3. Maschine Gegenstände nach Anspruch 2, **dadurch gekennzeichnet, dass** das Vibrationselement (15) mit zwei elastischen Elementen (20) verbunden ist, mit denen ein Exzenter (19) verbunden und an einem elektrischen Motor (18) derart befestigt ist, dass die Vibrationen nur in Längsrichtung zum Vibrationselement (15) verlaufen können.

## Revendications

1. Machine de fabrication par addition pour création d'objets tridimensionnels à partir d'une matiére en poudre et d'une substance de fusion, La machine consiste en un châssis (1) dans lequel sont situés l'un en dessous de l'autre un système de chargement (4), un système d'application de matériel en poudre (2), un système d'application de substance de fusion (3), conteneur (5) qui comprend un fond mobile, un système de fixation (6), un système de levage (7) pour soulever le fond mobile du conteneur (5), la machine de fabrication additive comprend également une unité de commande (9), et le système d'application de matériel en poudre (2) et le système d'application de substance de fusion (3) sont montés sur le châssis (1) de manière à pouvoir se déplacer mutuellement perpendiculaire sur le même plan, **caractérisé en ce que** l'unité de commande (9) est située à l'extrémité supérieure du châssis (1) et le système d'application de matériel en poudre (2) est constitué d'un corps (11) et de deux rouleaux (12) tournant dans des directions opposées, alimentés par deux moteurs électriques (13), où les deux rouleaux (12) sont séparés par une plaque de séparation (14) et les rouleaux ont des rainures d'où le matériel en poudre est dosé, et l'un des rouleaux travaille dans une direction et l'autre - dans l'autre direction.

2. La machine selon la revendication 1 **caractérisée en ce que** le système d'application de matériel en poudre (2) consiste en un élément (15) qui vibre longitudinalement, qui comporte un revêtement spécial (16), la partie vibrante suspendu sur des éléments élastiques (17), en permettant des vibrations uniquement dans la direction de la longueur.

3. La machine selon la revendication 2 **caractérisée en ce que** l'élément vibrant (15) est connecté à deux éléments élastiques (20) auxquels un excentrique (19) est connecté qui est lié à un moteur électrique, en permettant des vibrations uniquement dans la direction de la longueur de l'élément vibrant (15).
